# EUROPÄISCHE PATENTSCHRIFT

(11) **EP 1 656 493 B1**
(45) Veröffentlichungstag und Bekanntmachung des Hinweises auf die Patenterteilung: **17.11.2010**
(21) Anmeldenummer: 04741140.0
(22) Anmeldetag: 19.07.2004
(51) Int. Cl.: F01D 11/02, F01D 11/00

(54) **STATIONÄRE GASTURBINE**
STATIONARY GAS TURBINE
TURBINE A GAS

(30) Priorität: 21.08.2003 EP 03019002
(43) Veröffentlichungstag der Anmeldung: 17.05.2006
(60) Teilanmeldung: 10011185.5
(73) Patentinhaber: SIEMENS AKTIENGESELLSCHAFT, 80333 München (DE)
(72) Erfinder: TIEMANN, Peter, 58452 Witten (DE)
(86) Internationale Anmeldenummer: PCT/EP2004/008052
(87) Internationale Veröffentlichungsnummer: WO 2005/028812

(56) Entgegenhaltungen:
- FR-A- 2 241 691
- FR-A- 2 841 591
- GB-A- 2 002 460
- US-A- 2 988 325
- US-A- 4 425 079
- US-A- 5 222 742
- US-A- 5 816 776
- US-A- 6 050 079

## Beschreibung

Die Erfindung betrifft eine stationäre Gasturbine mit einem Innenring zum Halten von Leitschaufeln, wie es im Oberbegriff des Anspruchs 3 definiert wird. Eine solche Gasturbine ist aus der US-A-5 222 742 bekannt. Die Erfindung betrifft ferner ein Verfahren zum Montieren eines segmentierten Innenrings für Leitschaufeln einer stationäre Gasturbine.

Aus der DE 37 12 628 ist ein Innenring zum Halten von Leitschaufeln einer stationären Gasturbine bekannt. Die zu einem Leitschaufelring sternförmig um den Rotor angeordneten Leitschaufeln werden dabei mit ihrem radial außenliegenden Leitschaufelfuß am Gehäuse der Gasturbine befestigt. Die sich radial erstreckenden Leitschaufeln weisen an ihrer dem Rotor zugewandten Seite den Leitschaufelkopf auf, der mit dem feststehenden Innenring verbunden ist. Dieser im Querschnitt U-förmige Innenring umgreift den Rotor der Gasturbine koaxial und verbindet die Leitschaufeln eines Leitschaufelringes miteinander, um die Stabilität des Leitschaufelringes zu erhöhen und um das Schwingungsverhalten der Leitschaufeln zu verbessern. Ein Spalt ist dabei zwischen dem Steg des U-förmigen Innenrings, dessen Flanken und den korrespondierenden, dem Rotor zugehörigen Umfangs- und Stirnflächen gebildet. Gleichfalls weist der Steg des U-förmigen Innenrings an seiner dem Rotor zugewandten Oberfläche eine Hälfte einer Labyrinthdichtung auf, die mit der am Rotor angeordneten zweiten Hälfte die Labyrinthdichtung bildet.

Während des Betriebes der Gasturbine soll das im Strömungskanal strömende Arbeitsfluid nur an den Leitschaufeln eines Leitschaufelringes vorbeiscrömen. Jedoch kann das Arbeitsfluid auch durch den von feststehenden und rotierenden Komponenten gebildeten Spalt als Leckagestrom hindurchströmen. Um die Leckageströmung zu verringern, wird der Spalt zwischen den feststehenden und den rotierenden Komponenten mittels der Labyrinthdichtung abgedichtet.

Ferner ist bekannt, im Spalt zwischen der Flanke des Innenrings und des Wellenabsatzes mehrere Labyrinthdichtungen vorzusehen, um eine verbesserte Dichtwirkung zu erzielen. Dabei sind zwei Labyrinthdichtungen axial und radial versetzt zueinander terrassenförmig im Spalt zwischen Flanke und Wellenabsatz angeordnet.

Die terrassenförmige Anordnung mehrerer Labyrinthdichtungen ist raumintensiv und wird nur bei stationären Gasturbinen angewendet. Stationäre Gasturbinen weisen eine zwischen einer unteren und einer oberen Gehäusehälfte liegende Teilungsebene auf und werden bei der Montage radial zusammengesetzt. Dabei wird der fertige Rotor in die bereits vormontierte untere Gehäusehälfte eingelegt, auf die anschließend die obere Gehäusehälfte aufgesetzt wird, so dass zwischen dem Rotor und dem Gehäuse nur zueinander terrassenförmig versetzte Labyrinthdichtungen möglich sind.

Aus der US 5,222,742 ist eine gestapelte Labyrinthdichtung zwischen dem Befestigungsring für die Leitschaufel einer Turbine und eine auf dem Rotor der Turbine sitzenden Rotorscheibe bekannt. Die Turbine ist eine axial montierte Flugzeugturbine, d.h. die Montage der axial aufeinanderfolgenden Lauf- und Leitschaufelringe der einzelnen Verdichter- bzw. der Turbinenstufen erfolgt Ring für Ring nacheinander, so dass eine Stapelung möglich ist. Weitere derartig gestapelte Labyrinthdichtungen für Flugzeugturbinen sind aus der DE 199 31 765 und aus der FR 2 241 691 bekannt.

Da gestapelte Labyrinthdichtungen bisher hauptsächlich bei Flugzeugturbinen bekannt waren, konnte der Fachmann gestapelte Labyrinthdichtungen aufgrund der axialen Montageweise diese bisher nicht auf stationäre Gasturbine übertragen.

Die Aufgabe der Erfindung ist daher eine stationäre Gasturbinen mit einer Teilungsfuge so auszubilden, dass durch die aus den Flugzeugturbinen bekannte Stapelung von Labyrinthdichtungen die Leckageströmung vermindert wird. Weitere Aufgabe ist es, ein Verfahren zur Montage eines Innenringes anzugeben, welches eine Stapelung von Labyrinthdichtungen ermöglicht.

Die auf die Gasturbine bezogene Aufgabe wird durch die Merkmale des Anspruchs 3 und die auf das Verfahren bezogene Aufgabe wird durch die Merkmale des Anspruchs 1 gelöst. Vorteilhafte Ausgestaltungen sind in den Unteransprüchen gegeben.

Durch das Durchführen der Arbeitschritte des Anspruchs 1 ist es nun erstmals möglich, die aus den Flugzeugturbinen bekannte Anordnung von gestapelten Labyrinthdichtungen auch auf stationäre Gasturbinen zu übertragen. Somit ist es möglich, mehrere radial übereinander gestapelte Labyrinthdichtungen in einer stationären Gasturbine mit einer Teilungsebene anzuordnen und deren verbesserte Dichtwirkung für die stationäre Gasturbine zu nutzen. Der den Wirkungsgrad der stationären Gasturbine mindernde Leckagestrom wird dadurch erheblich reduziert.

Der benötigte Raumbedarf für die radial gestapelten Labyrinthdichtungen ist gegenüber der terrassenförmigen Anordnung geringer. Im besonderen ist die Ausdehnung der Dichtung als auch des gesamten Innenrings in axialer Richtung verkleinert worden.

Die Demontage einer solchen Gasturbine erfolgt in durch das Durchführen der Arbeitschritte des Anspruchs 1 in umgedrehter Reihenfolge.

Wenn für jede Labyrinthdichtung ein erster koaxialer Balkon an der Stirnseite des Innenrings und ein weiterer koaxialer Balkon am Wellenabsatz angeordnet ist, die jeweils in Axialrichtung vorspringen, können die beiden Balkone im montierten Zustand des Innenrings sich radial einander gegenüberliegen. Diese Stapelung von Balkonen ermöglicht die Reihenschaltung von Labyrinthdichtungen und formt einen meanderförmigen Spalt für den Leckagestrom.

Vorteilhafterweise wird die Labyrinthdichtung durch eine Dichtfläche und zumindest einen Dichtzahn gebildet, wobei der erste Balkon die koaxiale Dichtfläche aufweist, die dem weiteren Balkon zugewandt ist, und der weitere Balkon an seiner dem ersten Balkon zugewandten Umfangsfläche zumindest einen sich zur Dichtfläche hin erstreckenden umlaufenden Dichtzahn aufweist.

Zur axialen Sicherung ist der Innenring an den drehfesten Baugruppen und/oder an den Leitschaufeln festlegbar.

Wenn der Innenring zwischen zwei Laufschaufelringen angeordnet ist, kann dieser mittels eines Sicherungsrings gegen axiales Verschieben gesichert werden. Dabei ist der Sicherungsring segmentiert und an der Leitschaufel gelagert.

Zweckmäßigerweise ist der Sicherungsring stromaufwärts des Innenrings angeordnet.

Vorteilhafterweise sind die Dichtflächen und die an den Balkonen vorgesehenen Dichtzähne derart ausgebildet, dass eine bestimmungsgemäße Axialverschiebung des Rotors entgegen der Strömungsrichtung des Arbeitsfluids möglich ist, ohne dass sich eine Änderung der Dichtwirkung einstellt. Folglich kann während des Betriebes der Gasturbine der Rotor verschoben werden, ohne das sich die Dichtwirkung verschlechtert. Dies ist insbesondere wichtig, wenn durch die Verschiebung des Rotors der Spalt zwischen Laufschaufelspitze und der radial außen liegenden konischen Innenwand des Heißgaskanals verringert wird.

Die Erfindung wird anhand einer Zeichnung erläutert. Dabei zeigt:
- FIG 1: einen segmentierten Befestigungsring für Leitschau- feln einer ersten Turbinenstufe,
- FIG 2: den segmentierten Innenring für die Leitschaufeln einer zweiten, dritten und vierten Turbinenstufe und
- FIG 3: einen Längsteilschnitt durch eine Gasturbine.

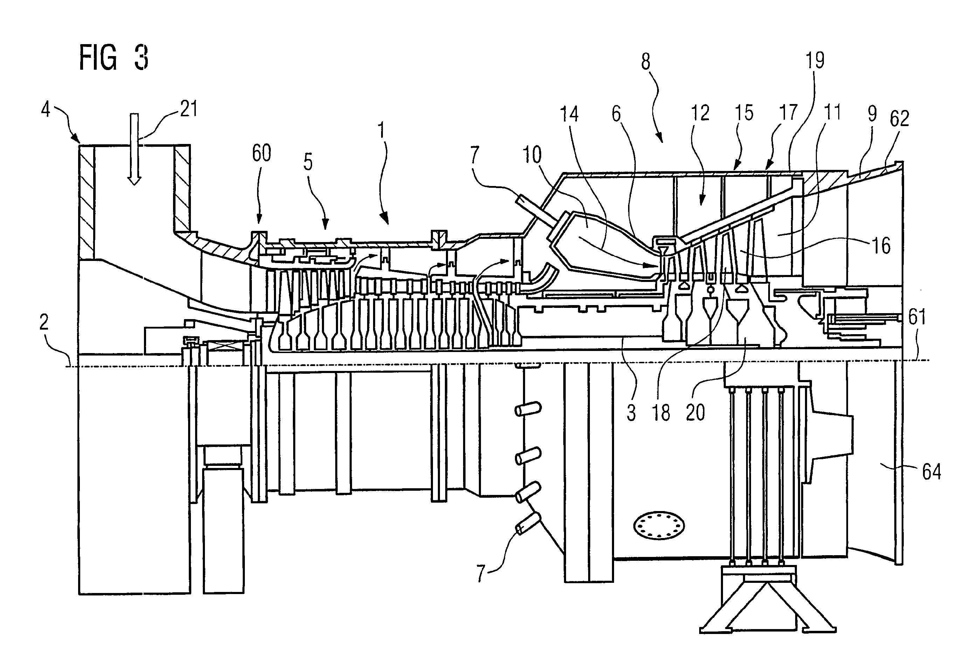

Die FIG 3 zeigt eine stationäre Gasturbine 1 in einem Längsteilschnitt. Sie weist im Inneren einen um eine Rotationsachse 2 drehgelagerten Rotor 3 auf, der auch als Turbinenläufer oder Rotorwelle bezeichnet wird. Entlang des Rotors 3 folgen aufeinander ein Ansauggehäuse 4, ein Verdichter 5, eine torusartige Ringbrennkammer 6 mit mehreren koaxial angeordneten Brennern 7, eine Turbine 8 und das Abgasgehäuse 9. Die Ringbrennkammer 6 bildet dabei einen Verbrennungsraum 10, der mit einem ringförmigen Heißgaskanal 11 kommuniziert. Dort bilden vier hintereinander geschaltete Turbinenstufen 12 die Turbine 8. Jede Turbinenstufe 12 ist aus zwei Schaufelringen gebildet. In Strömungsrichtung eines Arbeitsfluids 14 gesehen, folgt im Heißgaskanal 11 einem Leitschaufelring 17 ein aus Laufschaufeln 18 gebildeter Ring 15. Die Leitschaufeln 16 sind dabei am Stator 19 befestigt, wohingegen die Laufschaufeln 18 eines Ringes 15 mittels einer Turbinenscheibe 20 am Rotor 3 befestigt sind. An dem Rotor 3 angekoppelt ist ein Generator oder eine Arbeitsmaschine (nicht dargestellt).

Die stationäre Gasturbine 1 weist ein Gehäuse 60 auf, welches in Bezug auf eine zur Horizontebene parallel verlaufende Teilungsebene 61 in eine obere Gehäusehälfte 62 und eine untere Gehäusehälfte 64 zerlegbar ist. Bei der folgenden Verwendung der Begriffe "oben" und "unten" bzw. "obere Hälfte der/des..." und "untere Hälfte der/des..." ist dies für das betreffende Objekt jeweils in Bezug auf die Teilungsebene 61 der Gasturbine 1 zu verstehen.

Während des Betriebes der Gasturbine 1 wird vom Verdichter 5 durch das Ansauggehäuse 4 Luft 21 angesaugt und verdichtet. Die am turbinenseitigen Ende des Verdichters 5 bereitgestellte Luft 21 wird zu den Brennern 7 geführt und dort mit einem Brennmittel vermischt. Das Gemisch wird dann unter Bildung des Arbeitsfluids 14 im Verbrennungsraum 10 verbrannt. Von dort aus strömt das Arbeitsfluid 10 im Heißgaskanals 11 an den Leitschaufeln 16 und den Laufschaufeln 18 vorbei. An den Laufschaufeln 18 entspannt sich das Arbeitsfluid 14 impulsübertragend, so dass der Rotor 3 angetrieben wird und mit ihm die an ihn angekoppelte Arbeitsmaschine.

Die Leitschaufeln 16 weisen an ihrer dem Gehäuse 13 zugewandten Seite einen Leitschaufelfuß auf, mit dem sie in einem ringförmigen Leitschaufelträger verhakt sind. An ihrem dem Rotor 3 zugewandten Ende, dem Leitschaufelkopf, sind sie mit einem Innenring 30 verbunden.

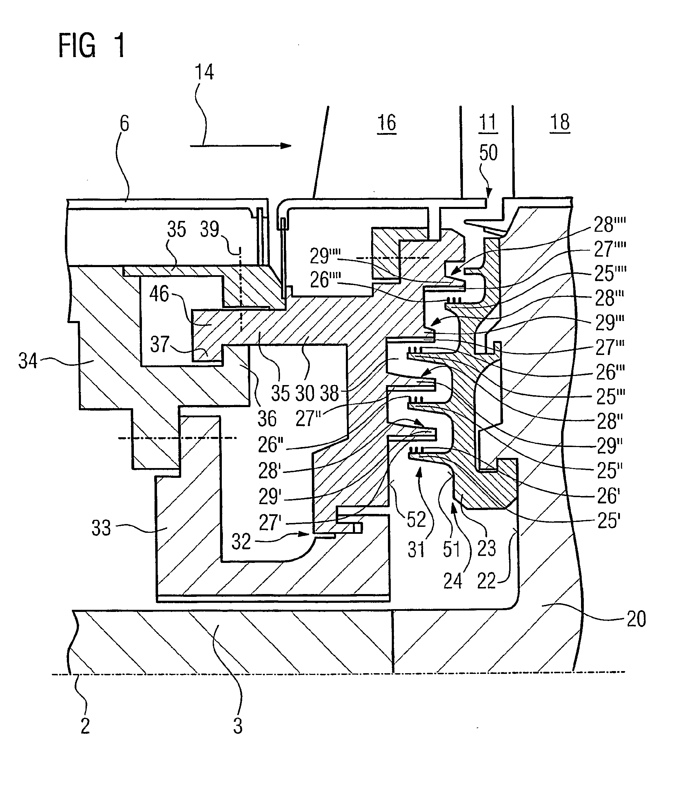

FIG 1 zeigt einen Ausschnitt aus der Gasturbine 1 zwischen der Leitschaufel 16 der ersten Turbinenstufe 12 und dem Rotor 3. Die radial innenliegende Innenwand der Brennkammer 6 begrenzt den Heißgaskanal 11 nach innen. In Strömungsrichtung des Arbeitsfluids 14 folgt der Leitschaufel 16 der ersten Turbinenstufe 12 die Laufschaufel 18.

Am Rotor 3 befindet sich die Turbinenscheibe 20, die an ihrem äußeren Umfang die Laufschaufeln 18 hält. Zur Sicherung der Laufschaufeln 18 gegen axiales Verschieben ist an einer Seitenwand 22 der Turbinenscheibe 20 ein Abdeckelement 23 mittels mehrerer radial beabstandeter Haken mit der Turbinenscheibe 20 verhakt. Dabei bildet das Abdeckelement 23 zusammen mit der Turbinenscheibe 20 einen Wellenabsatz 24.

An einer der Brennkammer 6 zugewandten Seitenwand 51 des Abdeckelements 23 sind mehrere sich in Axialrichtung erstreckende und koaxial umlaufende Balkone 25', 25", 25"', 25"" angeordnet. An jedem Balkon 25 erstrecken sich auf der dem Rotor 3 abgewandten Umfangsfläche jeweils drei Dichtzähne 26', 26", 26"', 26"", die koaxial auf dieser Umfangsfläche umlaufen.

Zwischen der radial innenliegenden Innenwand der Brennkammer 6 und dem Rotor 3 sind die drei Baugruppen 33, 34, 35 drehfest am Stator 19 montiert. Zwischen den Baugruppen 33, 34, 35 und dem Abdeckelement 23 ist der drehfeste Innenring 30 vorgesehen.

Der Innenring 30 weist an seiner dem Wellenabsatz 24 zugewandten Stirnseite 52 mehrere sich in Axialrichtung erstreckende und koaxial umlaufende Balkone 29', 29", 29"', 29"" auf. Dabei sind an den Umfangsflächen der Balkone 29, die den Dichtzähnen 26 zugewandt sind, jeweils Dichtflächen 27', 27", 27"', 27"" vorgesehen. Jede Dichtfläche 27 bildet mit ihren korrespondierenden Dichtzähnen 26 eine Labyrinthdichtung 28.

Zwischen dem Abdeckelement 23 und dem Innenring 30 ist ein meanderförmiger Spalt 38 geformt, in dem somit vier Labyrinthdichtungen 28', 28", 28"', 28"" sequenziell geschaltet sind, von denen die drei Labyrinthdichtungen 28', 28", 28"' radial übereinander gestapelt sind.

Die Labyrinthdichtung 28"" ist, bezogen auf die radial nächst innenliegende Labyrinthdichtung 28"' nicht radial gestapelt, sondern nach Art einer Terrasse angeordnet, d.h. die Labyrinthdichtung 28"" ist gegenüber der Labyrinthdichtung 28"' in Axialrichtung versetzt.

Der Innenring 30 weist an seiner der Brennkammer 6 zugewandten Stirnseite 32 einen sich in Axialrichtung erstreckenden Arm 46 auf, an dessen freien Ende ein sich in Radialrichtung nach innen erstreckender Vorsprung 37 angeformt ist.

Die Baugruppe 34 umfasst an ihrer dem Innenring 30 zugewandten Seite einen Vorsprung 36, der mit dem Vorsprung 37 des Innenrings 30 eine Verhakung bildet.

Während des Betriebes der Gasturbine 1 strömt im Heißgaskanal 11 ein Arbeitsfluid 14. Um ein Eindringen des Arbeitsfluids 14 als Leckagestrom in einen von feststehenden und rotierenden Komponenten gebildeten Spalt 38 zu verhindern, weist der Spalt 38 mehrere radial übereinander gestapelte Labyrinthdichtungen 28 auf, die strömungstechnisch gemeinsam als eine Dichtung 31 wirken.

Die drei ohne axialen Versatz zueinander gestapelten Labyrinthdichtungen 28', 28", 28"' erlauben eine kompaktere Bauweise bei gleichzeitiger Verbesserung der Dichtwirkung durch die Erhöhung der Anzahl von Labyrinthdichtungen 28.

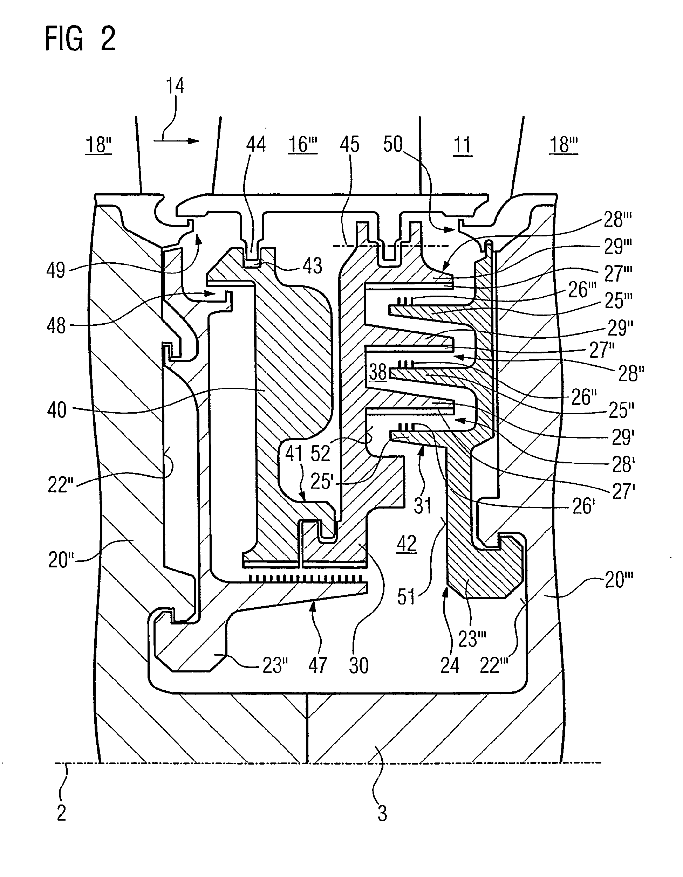

FIG 2 zeigt einen zwischen dem Heißgaskanal 11 und der Drehachse 2 des Rotors 3 liegenden Ausschnitt aus einer Gasturbine 1. Die Turbinenscheibe 20" trägt die Laufschaufel 18" der zweiten Turbinenstufe und die Turbinenscheibe 20"' die Laufschaufel 18"' der dritten Turbinenstufe. An der Seitenwand 22" der Turbinenscheibe 20" sichert das Abdeckelement 23" die Laufschaufel 18" gegen axiales Verschieben. Mittels zweier radial zueinander beabstandeter Verhakungen ist das Abdeckelement 23" mit der Turbinenscheibe 20" verhakt. Ebenso sichert das Abdeckelement 23"' die Laufschaufel 18"' gegen axiales Verschieben. Dabei ist das Abdeckelement 23"' mit der Turbinenscheibe 20"' auf der Seitenwand 22"' miteinander verhakt.

In der zwischen den beiden Turbinenscheiben 20", 20"' gebildeten nutförmigen Ausnehmung 42 ist der Innenring 30 mit einem Sicherungsring 40 vorgesehen.

Der Sicherungsring 40 ist mit dem Innenring 30 an seiner dem Rotor 3 zugewandten Seite mittels einer Verhakung 41 und an seiner dem Rotor 3 abgewandten Seite mit der Leitschaufel 16"' verbunden. Dazu ist der Innenring 30 mittels einer Schraube 45 mit der Leitschaufel 16"' verschraubt, wohingegen der Sicherungsring 40 mit der Leitschaufel 16"' verklemmt ist. Der Sicherungsring 40 weist eine Nut 43 auf, in die ein Vorsprung 44 sich erstreckt, der an der Leitschaufel 16"' angeordnet ist.

Das Abdeckelement 23"' weist an seiner der Turbinenscheibe 20"' abgewandten Seitenwand 51 drei sich in Axialrichtung erstreckende und koaxial umlaufende Balkone 25', 25", 25"' auf. Am Außenumfang der einzelnen Balkone 25', 25", 25"' sind jeweils drei koaxial umlaufende Dichtzähne 26', 26", 26" vorgesehen. Der Innenring 30 weist an seiner der Turbinenscheibe 20"' zugeordneten Stirnseite 52 ebenfalls drei Balkone 29', 29", 29"' auf, die sich in Richtung des Wellenabsatzes 24 erstrecken und quer dazu koaxial umlaufen. Jeder Balkon 29 weist an seiner inneren Umfangsfläche eine Dichtfläche 27 auf, die den radial weiter innen liegenden Balkonen 25 des Abdeckelementes 23"' zugewandt sind. Dabei bildet die Dichtfläche 27' mit dem Dichtzahn 26' eine Labyrinthdichtung 28', die Dichtfläche 27" mit dem Dichtzahn 26" eine weitere Labyrinthdichtung 28" und die Dichtfläche 27"' mit dem Dichtzahn 26"' die dritte Labyrinthdichtung 28"'.

Die in der FIG 2 gezeigte Dichtung 31 kann durch den Ablauf der folgenden Montageschritte zusammengebaut werden:
Zu Beginn der Montage der stationären Gasturbine 1 mit der Teilungsebene 61 wird zunächst die untere Gehäusehälfte 64 aufgestellt. In der unteren Gehäusehälfte 64 sind bereits jeweils die unteren Hälfen der Leitschaufelringe 17 durch vormontierte Leitschaufeln 16 fertiggestellt.

Am noch nicht eingelegten Rotor 3 ist lediglich das Abdeckelement 23" montiert, die Seitenwand 22"' weist noch kein Abdeckelement 23"' auf.

Für jeden erfindungsgemäßen Innenring 30 wird die untere Hälfte des Sicherungsrings 40, welches durch ein ein- oder mehrteiliges, insgesamt 180° großes Segment gebildet wird, in die untere Gehäusehälfte 64 eingelegt, so dass der Vorsprung 44 in die Nut 43 eingreift. Danach erfolgt die Montage der unteren Hälfte des Innenrings 30 in der untere Gehäusehälfte 64, welcher mit dem Innenring 30 verhakt und teilweise mit den Leitschaufeln 16 verschraubt wird, um diese gegen Relativbewegungen zu sichern. Dabei ist die untere Hälfte des Sicherungsrings 30 ebenfalls aus einem oder mehreren, insgesamt 180° großem Segment gebildet.

Wenn für jeden Sicherungsring 40 und Innenring 30 die untere Hälfte in der unteren Gehäusehälfte 64 montiert ist, wird der Rotor 3 in die untere Gehäusehälfte 64 eingelegt. Dabei dürfen zumindest die unteren Hälften der Seitenwand 22"' der Turbinenscheiben 20, welche der Stirnseite 52 später zugewandt sind, kein Abdeckelement 23"' aufweisen, da ansonsten der Rotor 3 nicht in die untere Gehäusehälfte 64 einlegbar ist.

Auf der oberen Hälfte der Seitenwand 22"' des bereits in die untere Gehäusehälfte 64 eingelegten Rotors 3 wird ein Segment des Abdeckelements 23"' montiert.

Anschließend wird der Rotor 3 gedreht, so dass beim Drehvorgang das auf der oberen Hälfte montierte Segment des Abdeckelements 23"' in die untere Gehäusehälfte 64 hineingedreht wird. Dabei bewegen sich die axial erstreckenden Balkone 25 des Abdeckelements 23"' exakt zwischen die korrespondierenden Balkone 29 des in der unteren Hälfte bereits befindlichen Innenrings 30.

Es werde derart viele Segmente von Abdeckelementen 23 auf der oberen Hälfte der Seitenwände 22 montiert und in die untere Gehäusehälfte 64 eingedreht, bis die unteren Hälfte der Dichtung 31 vollständig gebildet ist.

Nachdem dann die obere Hälfte des Abdeckelements 23 auf der oberen Hälfte des Rotors 3 an der Seitenwand 22"' montiert ist, kann als nächstes die obere Hälfte des Innenrings 30 zur dessen Fertigstellung in die zwischen den Turbinenscheiben 20", 20"' geformte Ausnehmung 42 radial nach innen bewegt werden, um dann deren Balkone 29 anschließend durch die Verschiebung in Axialrichtung über die Balkone 25 der Abdeckelemente 23"' zu bewegen. Dabei liegt die obere Hälfte des Innenrings 30 auf den Flanschen der unteren Hälfte des Innenrings 30 bzw. Sicherungsrings 40.

Danach wird die obere Hälfte des Sicherungsrings 40 in die Ausnehmung 42 bewegt und mit dem Innenring 30 zum Fertigstellen des kreisrunden segmentierten Sicherungsrings 40 verhakt.

In bereits bekannter Weise können dann die Leitschaufeln 16 der oberen Hälfte des Leitschaufelrings 17 montiert werden.

Für die Befestigung der Leitschaufeln 16 der in der FIG 1 gezeigten ersten Turbinenstufe 12 wird die Montageanleitung analog durchgeführt.

In der unteren Gehäusehälfte 64 sind die Leitschaufeln 16 und die Baugruppen bereits 35, 36, 37 vormontiert, bevor der Rotor 3 ohne Abdeckelement 23 in diese eingelegt wird.

Danach wird, wenn nicht bereits vorhanden, ein oder mehrere, Segmente des Abdeckelements 23 an die obere Hälfte der Seitenwand 22 der ersten Turbinenscheibe 20 montiert. Anschließend wird der Rotor 3 gedreht, so dass das oder die Segmente sich in die untere Gehäusehälfte 64 unter Bildung der unteren Hälfte der Dichtung 31 einschieben.

Nachdem die obere Hälfte des Abdeckelements 23 auf der oberen Hälfte des Rotors 3 an der Seitenwand 22 montiert ist, kann als nächstes die obere Hälfte des Innenrings 30 in den Freiraum zwischen Turbinenscheibe 20 und Ringbrennkammer 6 radial nach innen bewegt werden, um dann deren Balkone 29 anschließend in Axialrichtung über die Balkone 25 der Abdeckelemente 23 zu schieben. Dabei liegt die obere Hälfte des Innenrings 30 auf den Stirnseiten der unteren Hälfte des Innenrings 30.

Anschließend werden die Baugruppen 33, 34, und 36 sukzessive eingebaut.

In einer alternativen Ausgestaltung kann jedes Segment aus mehreren Teilstücken gebildet sein.

Beim Betrieb ist eine Verschiebung des Rotors 3 entgegen der Strömungsrichtung des Arbeitsfluids 14 möglich, ohne dass ein Balkon 25, 29 die ihm gegenüberliegende Stirnseite berührt oder an dieser anschlägt.

Der während des Betriebes der Gasturbine 1 drehfeste Innenring 30 bildet mit den rotierenden Abdeckelementen 23 einen Spalt 38, der mittels der Dichtung 31 abgedichtet wird. Das Arbeitsfluid 14 wird wirksam am Verlassen des Heißgaskanals 11 gehindert, so dass es bestimmungsgemäß an den Laufschaufeln 18 vorbeiströmt. Der Leckagestrom wird wirksam verringert, was zu einer Wirkungsgradsteigerung der stationäre Gasturbine führt.

Ferner verringern die Dichtungen 47, 48, 49, 50 den Leckagestrom zwischen rotierenden und drehfesten Komponenten.

## Patentansprüche

1. Verfahren zum Montieren eines segmentierten Innenrings (30) für Leitschaufeln (16) einer stationären Gasturbine (1),
die zwischen einer unteren Gehäusehälfte (64) und einer oberen Gehäusehälfte (62) eine Teilungsebene (61) aufweist,
wobei der aus Segmenten gebildete Innenring (30) den Rotor (3) der Gasturbine (1) koaxial umgreift und am Außenumfang in gleichen Winkelabständen eine Anzahl von Leitschaufeln (16) unter Bildung eines Leitschaufelrings (17) aufweist und der Innenring (30) mit seiner Stirnseite (52) einer sich radial erstreckenden Seitenwand (51) eines auf dem Rotor (3) ausgebildeten Wellenabsatzes (24) zugewandt ist,
wobei an der Stirnseite (52) des Innenrings (30) und an der gegenüberliegenden, korrespondierenden Seitenwand (51) des Wellenabsatzes (24) jeweils eine Hälfte einer Dichtung (31) ausgebildet ist, wobei
die sich aus mehreren radial übereinander gestapelten Labyrinthdichtungen (28) zusammensetzende Dichtung (31) und der Innenring (30) durch den Ablauf der folgenden Montageschritte zusammengefügt wird:
a) die untere Gehäusehälfte (64) wird mit Leitschaufeln (16) bestückt, anschließend wird die untere Hälfte eines aus einem oder mehreren Segmenten gebildeten Sicherungsrings (40) und danach die untere Hälfte des aus einem oder mehreren Segmenten gebildeten Innenrings (30) montiert,
b) der Rotor (3) wird in die untere Gehäusehälfte (64) gelegt,
c) ein Segment des ringförmigen Abdeckelements (23) wird an der oberen, frei zugänglichen, korrespondierenden Seitenwand (22) des Rotors (3) montiert, welches der Stirnseite (52) später zugewandt ist,
d) zur Bildung der unteren Hälfte der Dichtung (31) wird der Rotor (3) zumindest teilweise um die Bogenlänge des Segmentes des Abdeckelement (23) gedreht, so dass das an der oberen Hälfte des Rotors (3) montierte Segment des Abdeckelements (23) sich in die untere Hälfte des Innenrings (30) hineinbewegt,
e) die Schritte c) und d) werden so oft wiederholt, die untere Hälfte der Dichtung (31) fertig gestellt ist,
f) ein oder mehrere weitere Segmente des Abdeckelements (23) werden zur Komplettierung des ringförmigen Abdeckelements (23) an die obere, frei zugängliche korrespondierende Seitenwand (22) des Rotors (3) montiert,
g) zur Fertigstellung des Innenrings (30) und der Dichtung (31) werden ein oder mehrere Segmente des Innenrings (30) radial nach innen bewegt und anschließend in Richtung des Abdeckelements (23) verschoben,
h) zur Fertigstellung des Sicherungsrings (40) werden ein oder mehrere Segmente des Sicherungsrings (40) radial nach innen in den verbliebenen Freiraum eingeschoben.

2. Verfahren nach Anspruch 1,
derart modifiziert, dass zur Demontage des Innenrings (30) die Arbeitsschritte a) bis h) des Anspruchs 1 in umgekehrter Reihenfolge mit inversen Richtungsangeben durchgeführt werden.

3. Stationäre Gasturbine,
mit einer zwischen einer unteren Gehäusehälfte (64) und einer oberen Gehäusehälfte (62) eingeschlossenen Teilungsebene (61) sowie
mit einem Innenring (30) zum Halten von Leitschaufeln (16), der den Rotor (3) der Gasturbine koaxial umgreift und der am Außenumfang in gleichen Winkelabständen eine Anzahl von Leitschaufeln (16) aufweist, die einen Leitschaufelring (17) bilden, wobei eine der Stirnseite (52) des Innenrings (30) gegenüberliegende Seitenwand (51) eines auf der Rotorwelle ausgebildeten Wellenabsatzes (24) sich radial erstreckt und
wobei an der Stirnseite (52) des Innenrings (30) und an der sich radial erstreckenden Seitenwand (51) des Wellenabsatzes (24) jeweils eine Hälfte einer Dichtung (31) ausgebildet ist, die sich aus mehreren radial übereinander gestapelten Labyrinthdichtungen (28) zusammensetzt
**dadurch gekennzeichnet,**
**dass**
der Innenring (30) segmentiert ist und mittels eines Sicherungsrings (40) gegen axiales Verschieben gesichert ist und
nach einem Verfahren nach Anspruch 1 zusammengesetzt werden kann.

4. Vorrichtung nach Anspruch 3,
wobei für jede Labyrinthdichtung (28) ein erster koaxialer Balkon (25) an der Stirnseite (52) und ein weiterer koaxialer Balkon (29) am Wellenabsatz (24) angeordnet ist, die jeweils in Axialrichtung vorspringen und
dass die beiden Balkone (25,29) im montierten Zustand des Innenrings (30) sich radial einander gegenüberliegen.

5. Vorrichtung nach Anspruch 4,
wobei der erste Balkon (25) eine dem weiteren Balkon (29) zugewandte koaxiale Dichtfläche (27) aufweist und
der weitere Balkon (29) an seiner dem ersten Balkon (25) zugewandten Umfangsfläche zumindest einen sich zur Dichtfläche (27) hin erstreckenden koaxialen Dichtzahn (26) aufweist,
wobei die Labyrinthdichtung (28) durch die Dichtfläche (27) und den zumindest einen Dichtzahn (26) gebildet wird.

6. Vorrichtung nach Anspruch 3, 4 oder 5,
wobei der Innenring (30) an zumindest einer drehfesten Baugruppen (33, 34 ,35) und/oder an den Leitschaufeln (16) festlegbar ist.

7. Vorrichtung nach einem der Ansprüche 3 bis 6,
wobei der Sicherungsring (40) segmentiert und an der Leitschaufel (16) gelagert ist.

8. Vorrichtung nach Anspruch 7
wobei der Sicherungsring bezogen auf ein durch die Turbine axial strömendes Arbeitsfluid (14) stromaufwärts des Innenrings (30) angeordnet ist.

## Claims

1. Method for assembling a segmented inner ring (30) for guide vanes (16) of a stationary gas turbine (1),
which has a parting plane (61) between lower housing half (64) and an upper housing half (62),
the inner ring (30), which is formed from segments, engaging coaxially around the rotor (3) of the gas turbine (1) and at the outer circumference having a number of guide vanes (16) at equal angular intervals, so as to form a guide vane ring (17), and the end side (52) of the inner ring (30) facing a radially extending side wall (51) of a shaft shoulder (24) which is formed on the rotor (3),
in each case one half of a seal (31) being formed on the end side (52) of the inner ring (30) and on the opposite, corresponding side wall (51) of the shaft shoulder (24),
the seal (31), which is composed of a plurality of labyrinth seals (28) stacked on top of one another in the radial direction, and the inner ring (30) being put together by the sequence of the following assembly steps:
a) guide vanes (16) are mounted on the lower housing half (64), then the lower half of a securing ring (40), which is formed from one or more segments, and then the lower half of the inner ring (30), which is formed from one or more segments, are mounted,
b) the rotor (3) is placed into the lower housing half (64),
c) a segment of the annular covering element (23) is mounted on the upper, freely accessible, corresponding side wall (22) of the rotor (3), which segment subsequently faces the end side (52),
d) to form the lower half of the seal (31), the rotor (3) is at least partially rotated about the arc length of the segment of the covering element (23), so that that segment of the covering element (23) which has been mounted on the upper half of the rotor (3) moves into the lower half of the inner ring (30),
e) steps c) and d) are repeated until the lower half of the seal (31) is complete,
f) one or more further segments of the covering element (23), to finish the annular covering element (23), are mounted on the upper, freely accessible corresponding side wall (22) of the rotor (3),
g) to complete the inner ring (30) and the seal (31), one or more segments of the inner ring (30) are moved radially inward and then displaced in the direction of the covering element (23),
h) to complete the securing ring (40) one or more segments of the securing ring (40) are pushed radially inward into the clear space which remains.

2. Method according to Claim 1, modified in such a manner that to dismantle the inner ring (30) working steps a) to h) of Claim 1 are carried out in the reverse order, with the directional indications reversed.

3. Stationary gas turbine,
having a parting plane (61) enclosed between a lower housing half (64) and an upper housing half (62), and
having an inner ring (30) for holding guide vanes (16) which engages coaxially around the rotor (3) of the gas turbine and has, at equal angular intervals on the outer circumference, a number of guide vanes (16) which form a guide vane ring (17),
a side wall (51) of a shaft shoulder (24) formed on the rotor shaft, which side wall (51) lies opposite the end side (52) of the inner ring (30), extending radially, and
in each case one half of a seal (31), which is composed of a plurality of labyrinth seals (28) stacked on top of one another in the radial direction, being formed on the end side (52) of the inner ring (30) and on the radially extending side wall (51) of the shaft shoulder (24),
**characterized in that** the inner ring (30) is segmented and secured against axial displacement by means of a securing ring (40),
and can be assembled using the method according to Claim 1.

4. Device according to Claim 3,
in which for each labyrinth seal (28) a first coaxial balcony (25) is arranged on the end side (52) and a further coaxial balcony (29) is arranged on the shaft shoulder (24), which balconies each project in the axial direction, and
in that the two balconies (25, 29), in the assembled state of the inner ring (30), lie radially opposite one another.

5. Device according to Claim 4,
in which the first balcony (25) has a coaxial sealing surface (27) facing the further balcony (29), and
the further balcony (29), on its circumferential surface facing the first balcony (25), has at least one coaxial sealing tooth (26) extending toward the sealing surface (27), the labyrinth seal (28) being formed by the sealing surface (27) and the at least one sealing tooth (26).

6. Device according to Claim 3, 4 or 5,
in which the inner ring (30) can be fixed to at least one rotationally fixed module (33, 34, 35) and/or to the guide vanes (16).

7. Device according to one of Claims 3 to 6,
in which the securing ring (40) is segmented and is mounted on the guide vane (16).

8. Device according to Claim 7,
in which the securing ring is arranged upstream of the inner ring (30), based on a working fluid (14) flowing axially through the turbine.

## Revendications

1. Procédé de montage d'un anneau ( 30 ) intérieur segmenté pour des aubes ( 16 ) directrices d'une turbine ( 1 ) à gaz fixe,
qui a un plan ( 61 ) de séparation entre une moitié ( 64 ) inférieure du corps et une moitié ( 66 ) supérieure du corps,
dans lequel l'anneau ( 30 ) intérieur formé de segments entoure coaxialement le rotor ( 3 ) de la turbine ( 1 ) à gaz et a, sur le pourtour extérieur à des intervalles angulaires égaux, un certain nombre d'aubes ( 16 ) directrices avec formation d'un anneau ( 17 ) d'aubes directrices et l'anneau ( 30 ) intérieur est tourné par son côté ( 52 ) frontal vers une paroi ( 51 ) latérale s'étendant radialement d'un gradin ( 24 ) d'arbre formé sur le rotor ( 3 ),
dans lequel respectivement une moitié d'une étanchéité ( 31 ) est formée sur le côté ( 52 ) frontal de l'anneau ( 30 ) intérieur et sur la paroi ( 51 ) latérale opposée correspondante du gradin ( 24 ) d'arbre,
dans lequel l'étanchéité ( 31 ) se composant de plusieurs étanchéités ( 28 ) à labyrinthe empilées radialement les unes sur les autres et l'anneau ( 30 ) intérieur sont assemblés en faisant se dérouler les stades de montage suivantes :
a) on implante des aubes ( 16 ) directrices sur la moitié ( 64 ) inférieure du corps, on monte ensuite la moitié inférieure d'un anneau ( 40 ) de sécurité formé d'un segment ou de plusieurs segment et on monte ensuite la moitié inférieure de l'anneau ( 30 ) intérieur formé d'un segment ou de plusieurs segments,
b) on met le rotor ( 3 ) dans la moitié ( 64 ) inférieure du corps,
c) on monte un segment de l'élément ( 23 ) annulaire de recouvrement sur la paroi ( 22 ) latérale correspondante et accessible librement du rotor ( 3 ), élément qui est tourné ultérieurement vers le côté ( 52 ) frontal,
d) pour former la moitié inférieure de l'étanchéité ( 31 ), on fait tourner le rotor ( 3 ) au moins partiellement autour de la longueur d'arc du segment de l'élément ( 23 ) de recouvrement, de manière à déplacer vers l'intérieur de la moitié inférieure de l'anneau ( 30 ) intérieur le segment de l'élément ( 23 ) de recouvrement, segment qui est monté sur la moitié supérieure du rotor ( 3 ),
e) on répète les stades c) et d) aussi souvent jusqu'à ce que la moitié inférieure de l'étanchéité ( 31 ) soit finie de pose,
f) on monte un ou plusieurs autres segments de l'élément ( 23 ) de recouvrement pour compléter l'élément ( 23 ) annulaire de recouvrement sur la paroi ( 22 ) latérale correspondante supérieure et accessible librement du rotor ( 3 ),
g) pour finir la pose de l'anneau ( 30 ) intérieur et de l'étanchéité ( 31 ), on déplace radialement vers l'intérieur un ou plusieurs segments de l'anneau ( 30 ) intérieur et on les décale ensuite en direction de l'élément ( 23 ) de recouvrement,
h) pour finir la pose de l'anneau ( 40 ) de sécurité, on introduit un ou plusieurs segments de l'anneau ( 40 ) de sécurité radialement vers l'intérieur dans l'espace libre restant.

2. Procédé suivant la revendication 1,
modifié de sorte que, pour le démontage de l'anneau ( 30 ) intérieur, on effectue les stades a) à h) de travail de la revendication 1 dans l'ordre inverse avec des indications de direction inverses.

3. Turbine à gaz fixe,
comprenant un plan ( 61 ) de séparation inclus entre une moitié ( 64 ) inférieure de corps et une moitié ( 62 ) supérieure de corps ainsi que
comprenant un anneau ( 30 ) intérieur de maintien d'aubes ( 16 ) directrices qui entoure coaxialement le rotor ( 3 ) de la turbine à gaz et qui a sur le pourtour extérieur à des intervalles angulaires égaux un certain nombre d'aubes ( 16 ) directrices qui forment un anneau ( 17 ) d'aubes directrices,
dans laquelle une paroi ( 51 ) latérale opposée au côté ( 52 ) frontal de l'anneau ( 30 ) intérieur d'un gradin ( 24 ) d'arbre formé sur l'arbre du rotor s'étend radialement et
dans laquelle, sur le côté ( 52 ) frontal de l'anneau ( 30 ) intérieur et sur la paroi ( 51 ) latérale s'étendant radialement du gradin ( 24 ) d'arbre, est formée respectivement une moitié d'une étanchéité ( 31 ), qui est composée de plusieurs étanchéités ( 28 ) à labyrinthe empilées les unes sur les autres radialement, **caractérisée en ce que**
l'anneau ( 30 ) intérieur est segmenté et est bloqué au moyen d'un anneau ( 40 ) de sécurité vis-à-vis d'un déplacement axial et peut être composé suivant un procédé suivant la revendication 1.

4. Dispositif suivant la revendication 3,
dans lequel, pour chaque étanchéité ( 28 ) à labyrinthe, un premier balcon ( 25 ) coaxial est disposé sur le côté ( 52 ) frontal et un autre balcon ( 29 ) coaxial est disposé sur le gradin ( 24 ) d'arbre, ces balcons faisant saillie respectivement dans la direction axiale et
en ce que les deux balcons ( 25, 29 ) sont opposés l'un à l'autre radialement à l'état monté de l'anneau ( 30 ) intérieur.

5. Dispositif suivant la revendication 4,
dans lequel le premier balcon ( 25 ) a une surface ( 27 ) d'étanchéité coaxiale tournée vers l'autre balcon ( 29 ) et l'autre balcon ( 29 ) a sur sa surface périphérique tournée vers le premier balcon ( 25 ) au moins une dent ( 26 ) d'étanchéité coaxiale s'étendant vers la surface ( 27 ) d'étanchéité,
dans lequel l'étanchéité ( 28 ) à labyrinthe est formée par la surface ( 27 ) d'étanchéité et par la au moins une dent ( 26 ) d'étanchéité.

6. Dispositif suivant la revendication 3, 4 ou 5,
dans lequel l'anneau ( 30 ) intérieur peut être fixé sur au moins l'un des modules ( 33, 34, 35 ) fixes en rotation et/ou sur les aubes ( 16 ) directrices.

7. Dispositif suivant l'une des revendications 3 à 6,
dans lequel l'anneau ( 40 ) de sécurité est segmenté et est monté sur l'aube ( 16 ) directrice.

8. Dispositif suivant la revendication 7,
dans lequel l'anneau de sécurité est disposé en amont de l'anneau ( 30 ) intérieur rapporté à un fluide ( 14 ) de travail s'écoulant axialement dans la turbine.
